**Europäisches Patentamt**

**European Patent Office**

**Office européen des brevets**

(11) Publication number: **0 060 362**
A1

## (12) EUROPEAN PATENT APPLICATION

(21) Application number: 81305289.1

(22) Date of filing: 06.11.81

(51) Int. Cl.³: **B 60 R 1/06**

(30) Priority: **12.03.81 GB 8107875**

(43) Date of publication of application: **22.09.82**
**Bulletin 82/38**

(84) Designated Contracting States: **DE FR IT SE**

(71) Applicant: **SURREY STEEL COMPONENTS LIMITED, Trinity Road, Richmond Surrey TW9 2LG (GB)**

(72) Inventor: **Evans, Richard John Rees, 33 Copthall Road East, Ickenham Uxbridge UB10 8L (GB)**

(74) Representative: **Bayliss, Geoffrey Cyril et al, BOULT, WADE & TENNANT 27 Furnival Street, London EC4A 1PQ (GB)**

(54) **Adjustable rear view mirrors.**

(57) The mirror assembly comprises a mirror carrier (12), a mirror glass (20) mounted on the carrier for tilting movement relative to the carrier, a support (10), a hinge mechanism (14, 16, 18) for mounting the carrier in a normal position on the support whilst permitting the carrier to be deflected from the normal position when struck, and an adjustment mechanism for the mirror glass which extends from the support (10) to the mirror glass (20).

In order to permit the carrier (12) to be deflected unrestricted by the adjustment mechanism, the adjustment mechanism includes push-rods (25, 26) within the carrier (12) which abut, adjacent the hinge mechanism, respective cams (44) or cam followers (42) mounted on the support (10) to permit a line of break in the adjustment mechanism when the carrier (12) is deflected.

The assembly is particularly for use on road vehicles, the support being mounted on or forming part of the vehicle body.

0060362

## ADJUSTABLE REAR VIEW MIRRORS

The invention relates to rear view mirror assemblies, especially for motor vehicles.

It is known to provide a vehicle rear view mirror which can be adjusted remotely by an occupant of the vehicle, the mirror being adjustable by means of bowden cable mechanisms extending from the mirror to a remote-control device located within the vehicle. In the case where such a mirror is hinged so that it can be deflected when struck, for example by another vehicle or a gate-post, a problem occurs in that the bowden cable mechanisms can become permanently kinked, thus rendering the mirror difficult, or even impossible, to adjust.

According to the present invention, there is provided a rear view mirror assembly comprising a mirror holder, a mirror mounted on the holder for tilting movement relative to the holder, a support, means for mounting the holder in a normal position on the support whilst permitting the holder to be deflected from the normal position relative to the support when struck, and an adjustment mechanism for the mirror which extends from the support to the mirror characterised in that the adjustment mechanism includes means between the support and the mirror to permit a line of break in the mechanism so that the holder can be deflected unrestricted by the adjustment mechanism.

Thus, when the holder is deflected, a line of break is caused, and the adjustment mechanism does not become damaged. When the holder is returned to its normal position, the adjustment mechanism returns the mirror to its previously adjusted position unless the mechanism has been adjusted in the meantime.

In one embodiment one of said push-elements is provided, and the mirror is preferably supported by the holder for pivotal movement about a hinge axis. When the hinge axis is arranged to be vertical, this embodiment is of particular use on articulated lorries, where the field of view of a fixed mirror can be obscured by the lorry trailer when the lorry is turning.

In another embodiment, two of said push-elements are provided each with respective presser means, the mirror is preferably supported by the holder for pivotal movement about a pivot point. Thus, the mirror can be adjusted universally.

A specific embodiment of the present invention will now be described by way of example, reference being made to the accompanying drawings in which:

Figure 1 is a diagrammatic sectioned plan view of a rear view mirror assembly according to the present invention;

Figure 2 is a partial front elevation of the mirror glass of the assembly shown in Figure 1; and

Figure 3 is a perspective view of a component part of the assembly shown in Figure 1.

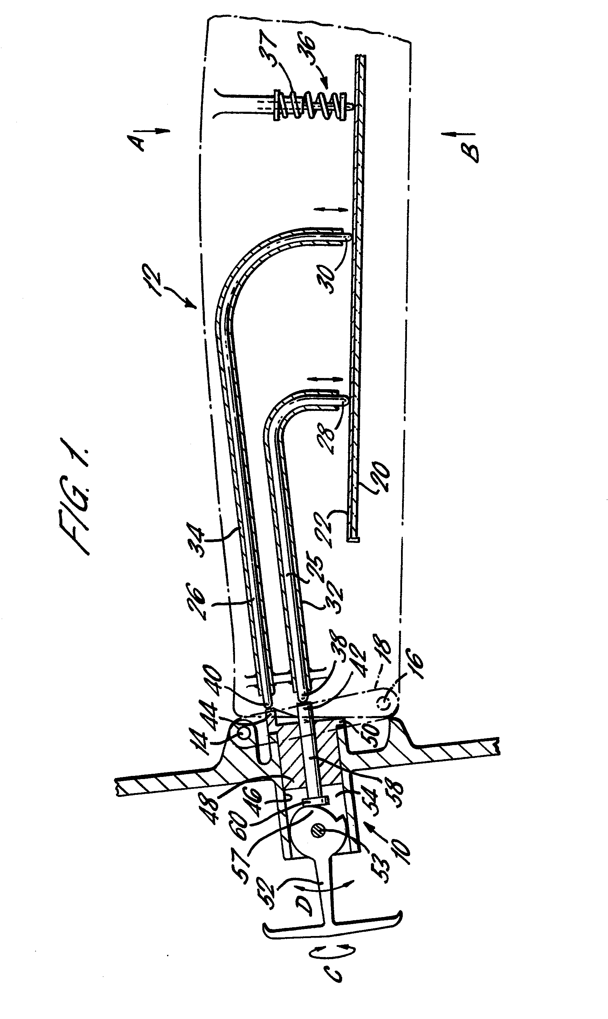

Referring to Figure 1, a support for a vehicle rear view mirror assembly in indicated by the reference numeral 10, the support 10 being adapted for fixing to the vehicle body. A mirror carrier 12 is mounted on the support 10 by means of a double hinge mechanism having one hinge pin 14 mounted on the support 10, the other hinge pin 16 mounted on the carrier 12 and the hinge pins 14,16 connected by a link or links 18.

A strong tension spring (not shown) acts between the carrier 12 and the support 10 to hold the carrier 12 in the position shown in the Figure 1 relative to the support 10. Thus, if the carrier 12 is forced in the direction A, the carrier 12 can pivot in a clockwise direction around the hinge pin 16, and if the carrier 12 is forced in the opposite direction B, the carrier 12 and link 18 can pivot in an anticlockwise direction around the hinge pin 14.

A mirror glass 20 having a backing sheet 22 is supported by the mirror carrier 12 for tilting motion by a spherical pivot 24 so that the mirror glass 20 can tilt, within limits, about any axis lying generally parallel to the plane of the glass 20 and passing through the spherical pivot 24.

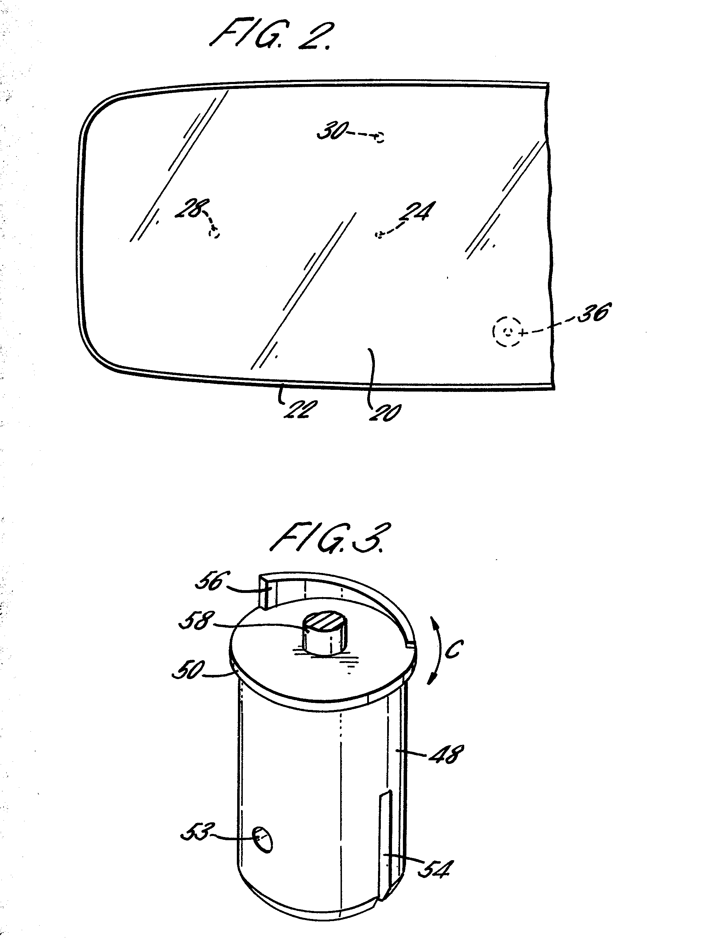

A pair of flexible push-rods 25,26 extend from adjacent the hinge mechanism between the hinge pins 14,16, to bear on the backing plate 22 of the mirror glass, the push-rod 25 bearing by its end 28 on the backing plate directly to the left (as viewed in Figure 2) of the pivot 24, and the push-rod 26 bearing by its end 30 on the backing plate directly above the pivot 24.

The flexible push-rods 25,26, which may, for example, be formed by elements which are more usually used as the outer sheaths of bowden cables, are guided by respective curved tubes 32,34 which are fixed in the mirror carrier 12 and extend from adjacent the hinge mechanism to adjacent the backing plate 22, the tubes 32,34 directing the ends 28,30 of the push-rods 25,26 generally perpendicularly towards the backing plate 22.

A spring loaded plunger 36 including a compression spring 37 extends between the carrier 12 and the backing plate 22 at a location below and to the right of (as viewed in Figure 2) the spherical pivot 24. Thus, the plunger 36 urges the backing plate 22 about the pivot 24 against the ends 28,30 of both flexible push-rods 25,26.

It can be noted that the positions of the ends 38,40 of the push-rods 25,26 adjacent the hinge mechanism define the positions of the other ends 28,30 of the push rods. Furthermore, these latter positions in combination with the position of the spherical pivot 24 define the position of the mirror glass 20, since the backing plate 22 is urged by the plunger 36 against the ends 28,30 of the push-rods 25,26.

The flexible push-rods 25,26, their guide tubes 32,34 and the spring-loaded plunger 36 are constructed such that the plunger 36 is sufficiently strong to be able to overcome any friction between the push-rods 25,26 and the tubes 32,34.

Referring to Figures 1 and 3, the support 10 is provided with adjustable stops 42,44 against which respective ends 38,40 of the flexible push-rods 25,26 are urged into abutting engagement. The support 10 has a bore 46, in which a cylindrical member 48 is rotatably mounted with a flange 50 of the member abutting an end face of the bore. A T-shaped handle 52, which is manually operable from within the vehicle, is pivotally mounted by a pin 53 in a slot 54 in the member 48 so that rotation of the handle 52 generally about the central limb of the T-shape, that is in direction C, causes the member 48 to rotate about its axis.

The flange 50 is provided with a varying height lip 56 extending partway around the flange 50.

The axially facing face of the lip 56 acts as a cam and provides the stop 44 for the end 40 of the push-rod 26, the end 40 acting as the cam follower.

The base of the handle 52 is formed also as a cam, having a surface 57, facing the bottom of the slot 54, of which the distance from the pin 53 varies with pivoting of the handle around the pin 53. A rod 58 extending axially along the cylindrical member 48 acts as a cam follower, a headed end 60 of the rod 58 engaging the surface 57 and the other end providing the stop 42 for the end 38 of the push-rod 25.

Means, not shown, are provided to prevent the member 48 being moved to the right as view in Figure 1.

It can be noted that rotation of the handle 52 in one direction generally about the axis of the central limb of the T-shape causes the stop 44 to move outwardly and thus the end 40 of the flexible push-rod 26 is depressed causing the other end 30 to force the mirror to tilt about an axis extending between the pivot 24 and the end 28 of the other push-rod 25 against the action of the plunger 36. Conversely, rotation of the handle 52 in the opposite direction causes the stop 44 to move inwardly, thus permitting the push-rod 25 and the mirror to return under the action of the plunger 36.

Similarly rotation of the handle 52 about the pivot 53, that is in direction D, causes, or permits, the rod 58 to move away from, or towards, the pivot 53, causes, or permits, the push-rod 25 to be depressed, or to return, and causes, or permits the mirror to be tilted about an axis extending between the pivot 24 and the end 30 of the other push-rod 26 against, or under, the action of the plunger 36.

By combining rotation of the handle 52 generally about the axis of the central limb of the T-shape, in direction C, with rotation about the pin 53, in direction D, it is possible to tilt the mirror within limits, about any axis extending through the pivot 24 and generally parallel to the mirror 20.

The assembly is constructed such that friction is sufficient to prevent the plunger 36 being able to force the handle 52 to move.

If the carrier is struck and deflected in the directions A or B, then the ends 38,40 of the push-rods 25,26 will separate from the stops 42,44. Thus the mirror will be tilted at the carrier 12 to a limiting position by the plunger 36. However, when the carrier is returned to its normal position, as shown in Figure 1, the tilt of mirror will be restored to its previously set amount, unless the handle 52 has since been moved.

In a modification of the embodiment of the invention described above, the mirror glass 20 is mounted on the carrier 12 by a hinge for tilting about a generally vertical axis. One push-rod is used, rather than two, to push the mirror about the axis against the action of the plunger, which is located on the other side of the axis and accordingly only one adjustable stop is required. Such a modified arrangement is particularly useful for articulated lorries, where the field of vision of a fixed mirror can be obscured by the lorry trailer when the lorry is turning.

Many different types of manual control can be used instead of the arrangment having a T-shaped handle 52 described above. For example, a generally horizontally extending "joystick" type control column may be used with associated cams so that movement of the column up-and-down and from side-to-side causes the mirror to tilt up-and-down and from side-to-side, respectively. Alternatively, each stop may be provided by a screw threaded adjuster having a manually operable knob.

Whilst the push-rod guides have been described above as being in the form of tubes 32,34, the guides may be formed, especially when the carrier 12 is a plastics moulding, by tracks or channels moulded into the carrier. Furthermore, other linkages may be provided for transmitting motion from push elements which can engage the adjustable stops 42,44 to the mirror.

The arrangement described above may also be modified by the use with other types of hinge mechanism between the support and the carrier, for example, a double hinge having detents associated with each hinge pin to retain the carrier in the normal position, or a single axis hinge arranged such that carrier clears the support when it is deflected in at least one direction.

CLAIMS

1. A rear view mirror assembly comprising a mirror holder (12), a mirror (20) mounted on the holder for tilting movement relative to the holder, a support (10), means (14, 16, 18) for mounting the holder (12) in a normal position on the support (10) whilst permitting the holder to be deflected from the normal position relative to the support when struck, and an adjustment mechanism for the mirror which extends from the support to the mirror characterised in that the adjustment mechanism (57, 58, 25, 56, 26) includes means (40, 44, 38, 42) between the support (10) and the mirror (20) to permit a line of break in the mechanism so that the holder (12) can be deflected unrestricted by the adjustment mechanism.

2. An assembly as claimed in claim 1, characterised in that the adjustment mechanism includes at least one push element (25; 26) on the holder (12) and adjustable presser means (42; 44) on the support (10) for bearing on an end (38; 40) of the push element (25; 26) to adjust the mirror (20), the push element (25; 26) and presser means

0060362

(42; 44) being separable upon deflection of the holder (12) form the normal position.

3. An assembly as claimed in claim 2, characterised in that the other end (28; 30) of push-element (25; 26) bears on the mirror (20), biasing means (36) being provided to bias the mirror (20) against said other end (28; 30) of the push-element so that said one end (38; 40) of the push-element is biased to abut the presser means (42; 44).

4. An assembly as claimed in claim 3, characterised in that the push-element (25; 26) is flexible, and guide means (32; 34) being provided to guide the path of the push-element (25; 26) between the ends (28, 38; 30, 40) thereof.

5. An assembly as claimed in claim 4, characterised in that said guide means comprises a guide tube (32; 34) mounted on the holder (12).

6. An assembly as claimed in claim 4, characterised in that said guide means is provided by a channel or track formed in the holder (12).

7.    An assembly as claimed in any one of claims 2 to 6, characterised in that one of said push-elements is provided and the mirror is supported by the holder for pivotal movement about a hinge axis.

8.    An assembly as claimed in claim 7 as dependent on claim 3, characterised in that the biasing means includes a compression spring, the biasing means and the other end of the push-element bearing on the reverse side of the mirror on opposite sides of said hinge axis.

9.    An assembly as claimed in claim 7 or 8, characterised in that a manually operable control device is provided for adjusting the position of adjustment of the presser  means.

10.    An assembly as claimed in any one of claims 2 to 6, characterised in that two of said push-elements (25, 26) are provided each with respective presser means (42, 44), the mirror (20) being supported by the holder (12) for pivotal movement about a pivot point (24).

11.    An assembly as claimed in claim 10, as dependent on claim 3, characterised in that the biasing means (36) includes a compression spring (37), the biasing means and said other ends (28, 30) of the push-elements (25, 26) bearing on the reverse side of the mirror (20), said other end (28, 30) of each push-element and the location at which the biasing means (36) bears on the mirror (20) being spaced by more than a right angle about the pivot point (24).

12. An assembly as claimed in claim 11, characterised in that said other ends (28, 30) of the push-elements (25, 26) are spaced by a right angle about the pivot point (24).

13. An assembly as claimed in any one of claims 10 to 12, characterised in that each presser means has a respective manually operable control device for adjusting the position of adjustment of that presser means.

14. An assembly as claimed in any one of claims 10 to 12, characterised in that both presser means (42, 44) have a common manually operable control device (52) for adjusting the positions of adjustment of both presser means (42, 44) independently.

15. An assembly as claimed in any one of the preceding claims, characterised in that the or at least one of the adjustment mechanisms includes a cam (56) provided on the support (10), the or the respective push-element (26) acting as a cam follower for the cam when the holder (12) is in the normal position.

16. An assembly as claimed in any one of the preceding claims, characterised in that the or at least one of the adjustment mechanisms includes a cam (57) having a cam follower (58) provided on the support (10), the or the respective push-element (25) being biased to abut the cam follower (58) when the holder (12) is in the normal position.

17. An assembly as claimed in any one of the preceding claims, characterised in that the or at least one of the adjustment mechanisms includes a screw-threaded adjuster provided on the support, the or the respective presser means being provided by an end face of the adjuster.

18. A rear view mirror assembly substantially as hereinbefore described with reference to and as illustrated in the accompanying drawings.

GCB/KST/SA/EA 456

0060362

CLAIMS

1. A rear view mirror assembly comprising a mirror holder (12), a mirror (20) mounted on the holder for tilting movement relative to the holder, a support (10), means (14, 16, 18) for mounting the holder (12) in a normal position on the support (10) whilst permitting the holder to be deflected from the normal position relative to the support when struck, and an adjustment mechanism for the mirror which extends from the support to the mirror characterised in that the adjustment mechanism (57, 58, 25, 56, 26) includes means (40, 44, 38, 42) between the support (10) and the mirror (20) to permit a line of break in the mechanism so that, whatever the position of adjustment of the mirror on the holder, the holder (12) can be deflected unrestricted by the adjustment mechanism.

2. An assembly as claimed in claim 1, characterised in that the adjustment mechanism includes at least one push element (25; 26) on the holder (12) and adjustable presser means (42; 44) on the support (10) for bearing on an end (38; 40) of the push element (25; 26) to adjust the mirror (20), the push element (25; 26) and presser means

FIG. 1.

2/2

FIG. 2.

FIG. 3.

European Patent Office

**EUROPEAN SEARCH REPORT**

00 60 362

Application Number

EP 81 30 5289.1

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | <u>FR - A - 1 552 228</u> (TUGONIA) <br> * fig. 1 * <br> -- | | B 60 R 1/06 |
| A | <u>FR - A7 - 2 314 642</u> (VITALONI) <br> * fig. 1, reference no. 44 * <br> -- | | |
| A | <u>GB - A - 1 543 818</u> (B.S.G. INTERNATIONAL) <br> * fig. 1 * <br> ---- | | |

**TECHNICAL FIELDS SEARCHED (Int. Cl.³)**

B 60 R 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 21-01-1982 | BECKER |

EPO Form 1503.1   06.78